# FASCICULE DE BREVET EUROPEEN

(11) **EP 0 574 357 B1**
(45) Date de publication et mention de la délivrance du brevet: **31.01.1996**
(21) Numéro de dépôt: 93810415.5
(22) Date de dépôt: 09.06.1993
(51) Int. Cl.: F16J 10/02, F16K 7/12, F16J 3/02, F16B 21/18

(54) **Dispositif d'assemblage par pincement d'une pièce élastiquement compressible**
Zusammenbauvorrichtung durch Klemmen eines elastisch zusammendrückbaren Teiles
Assembling device through clamping an elastic compressible piece

(30) Priorité: 11.06.1992 CH 1853/92
(43) Date de publication de la demande: 15.12.1993
(73) Titulaire: HONEYWELL LUCIFER SA, CH-1227 Carouge (Genève) (CH)
(72) Inventeur: Ramillon, Jean-Pierre, CH-1258 Perly (CH); Zuccone, Louis, CH-1213 Onex (CH)
(74) Mandataire: Meylan, Robert Maurice

(56) Documents cités:
- CH-A- 132 898
- GB-A- 1 020 899
- GB-A- 2 014 274
- GB-A- 2 132 315
- US-A- 2 533 531
- US-A- 2 611 505
- US-A- 2 725 252
- US-A- 2 861 712

## Description

La présente invention concerne un dispositif d'assemblage par pincement d'une pièce élastiquement compressible dans le fond d'un logement cylindrique au moyen d'un corps ayant une forme conjuguée à la forme du logement lui permettant de se déplacer axialement dans ledit logement ledit corps étant bloqué, de manière à comprimer la pièce élastiquement compressible, par un jonc fendu disposé dans une gorge de la paroi cylindrique du logement, la forme et les dimensions du jonc étant choisies de manière qu'il s'appuie contre une surface périphérique dudit corps pour l'empêcher de se déplacer axialement vers l'extérieur du logement. Un tel dispositif est connu du document US-A-2 611 505. Le dispositif selon l'invention est utilisé plus particulièrement pour l'assemblage par pincement de la membrane élastique par un couvercle d'une électrovanne.

Il est connu de fixer par pincement la membrane élastique d'une électrovanne à deux voies servocommandée par un couvercle vissé, soit au moyen de vis auxiliaires, soit au moyen d'un filetage et taraudage dont sont munis le couverle et le logement.

La présente invention a pour but de proposer une construction beaucoup plus simple et notamment de supprimer le vissage.

Le dispositif selon la présente invention est caractérisé par le fait que le jonc est verrouillé dans la gorge par une bague présentant des premières zones qui par leur forme empêchent le jonc de sortir de ladite gorge et des secondes zones munies de moyens conjugués à des moyens correspondants dudit corps collaborant à la fixation par encliquetage de la bague sur le corps.

La solution connue de US-A-2 611 505 prévoit l'utilisation d'une bague ou jonc fendu pour la fixation du corps dans le logement.

Toutefois, il s'est avéré que le jonc ne pénètre pas suffisamment dans la gorge et que, sous l'effet de la pression du fluide dans la chambre de commande de l'électrovanne, le jonc peut être expulsé. L'utilisation d'une bague de verrouillage permet d'assurer, d'une part, que le jonc se trouve bien à l'intérieur de la gorge tout en empêchant le déplacement du corps vers l'extérieur du logement en raison du fait que des secteurs de la bague s'appuient contre le jonc pour l'empêcher de sortir et, d'autre part, que la bague est fixée sur le corps par des moyens d'encliquetage.

Si l'on désire pouvoir démonter le jonc, il peut être avantageusement prévu une encoche dans la gorge permettant l'introduction, par exemple, d'un tournevis pour pousser le jonc en dehors de la gorge.

Selon une forme d'exécution de l'invention, la bague que nous désignerons par la suite bague de sécurité, présente également des moyens pour permettre son démontage. Ces moyens sont de préférence au nombre de deux : une languette qui permet aussi de couvrir l'encoche de la gorge afin que l'on ne puisse pas extraire le jonc avant le démontage de la bague et une ou plusieurs discontinuités sur le pourtour de la bague permettant par exemple l'introduction d'un tournevis ou d'un organe similaire pour obtenir le démontage de la bague de sécurité.

Selon une forme d'exécution de l'invention les moyens d'encliquetage sont constitués soit par un renflement ou cordon continu ou discontinu intérieur de la bague qui est faite d'un matériau élastiquement déformable, de préférence synthétique ou composite (fibre de carbone ou fibre minérale), tandis qu'une gorge est prévue sur le corps pour collaborer avec le renflement ou cordon de la bague.

Il est également possible de prévoir un corps fait d'un matériau présentant une certaine élasticité tandis que la bague est faite d'un matériau rigide et dans ce cas la bague présente une gorge et le corps un certain nombre de saillies pour assurer la fixation de la bague.

Ce dispositif est avantageusement utilisé pour la fixation d'une membrane élastique d'une électrovanne servocommandée.

Par logement cylindrique, nous entendons tout logement dont la section perpendiculaire à son axe est de forme polygonale, elliptique, circulaire, etc...

L'invention sera décrite plus en détail à l'aide du dessin annexé.

La figure 1 est une vue par en dessous de la bague, complétée d'une coupe du logement d'un dispositif selon l'invention.

La figure 2 est une vue en coupe selon la ligne II-II de la figure 1.

La figure 3 est une vue en coupe selon la ligne III-III de la figure 1.

La figure 4 est une vue en coupe partielle selon la ligne IV-IV similaire à la figure 3 présentant la mise en place de la bague selon une variante préférée.

La figure 5 est une coupe d'une électrovanne servocommandée à deux voies dont la membrane élastique est fixée par le dispositif selon l'invention.

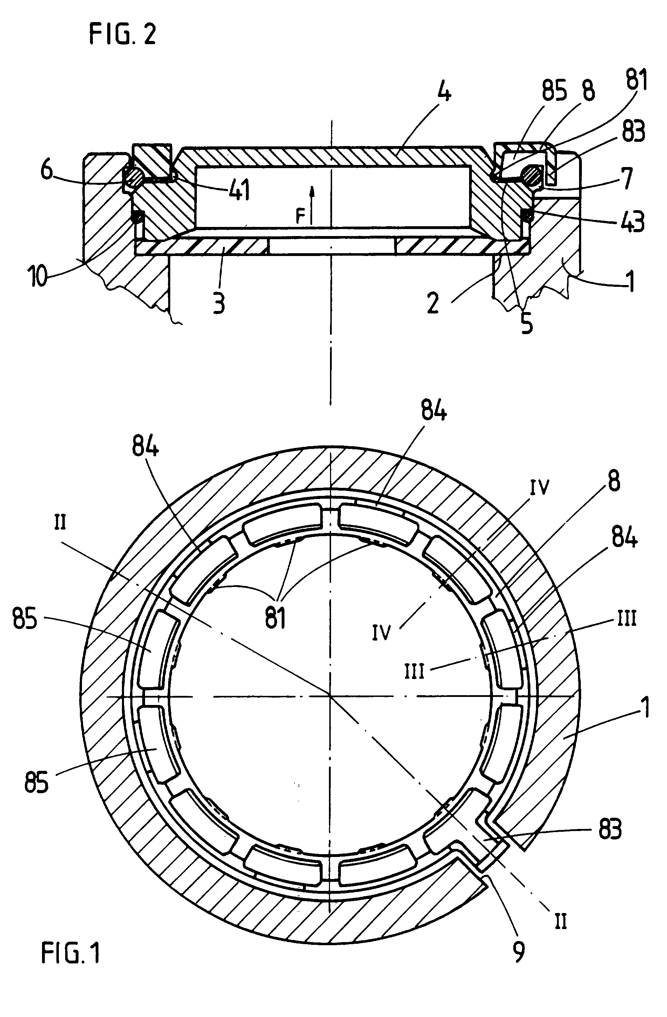

En se référant aux figures 1 et 2, nous avons une représentation schématique d'un montage selon l'invention.

Dans un logement 1 présentant un épaulement 2 est fixée une membrane compressible 3 au moyen d'un couvercle ou corps 4 dont la forme est conjuguée à la forme intérieure du logement 1. Le corps 4 présente sur sa partie supérieure un rétrécissement formant un épaulement 5. Un jonc 6 est logé dans une gorge 7 du logement 1 et s'appuie par une partie de sa surface contre le corps 4 pour le tenir pressé contre la membrane élastique 3. Le jonc 6 s'appuie dans le cas présent sur une partie chanfreinée du corps 4.

Dans le but d'empêcher la sortie intempestive du jonc 6 de la gorge 7 sous la poussée, selon la direction F, exercée sur le corps 4 par la membrane 3, une bague de sécurité 8 est fixée sur le corps 4. La bague 8 vient s'encliqueter par des zones constituées de renflements intérieurs 81 dans une gorge 41 du corps 4. Dans ce cas la bague 8 est faite d'un matériau déformable élastiquement lui conférant une certaine élasticité pour permettre son montage et le démontage par encliquetage. Un tel matériau peut être un matériau synthétique ou composite par exemple fibre de carbone ou fibre minérale. La bague présente sur la face opposée à celle munie de renflements 81 des zones 82 de forme conjuguée à la surface du jonc 8 de manière à empêcher le jonc 6 de sortir de la gorge 7.

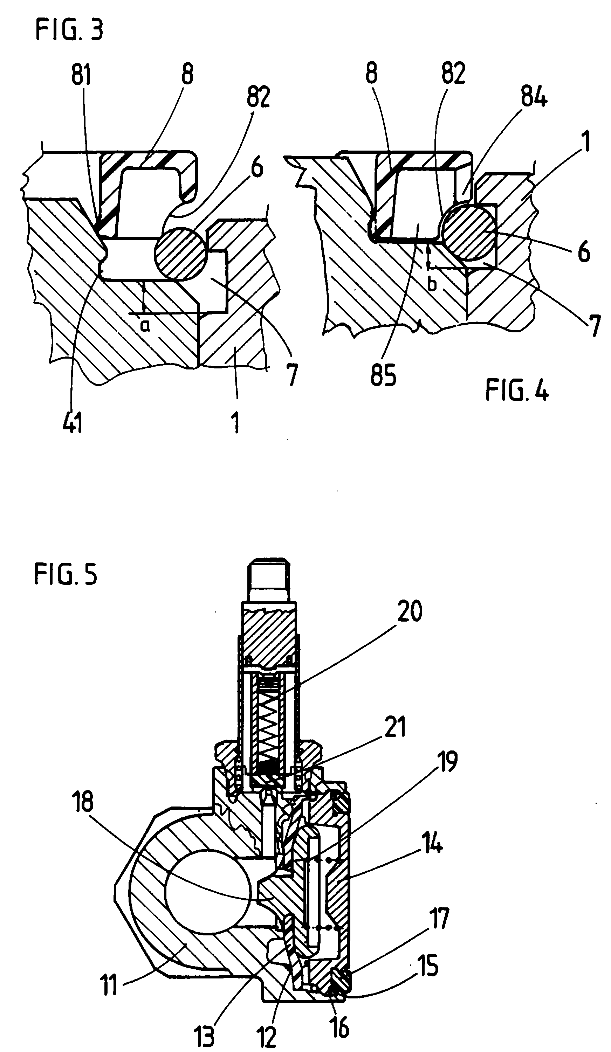

A la figure 4 est illustrée la forme d'exécution préférée de l'invention selon laquelle la forme et dimensions des secteurs 82 permettent lors de la mise en place de la bague 8 de pousser le jonc dans la gorge 7 et obtenir le pincement maximum de la membrane 3. A titre indicatif, en comparant les longueurs a et b représentées aux figures 3 et 4, nous avons la relation a > b, c'est-à-dire que le corps 4 lors de la mise en place de la bague est simultanément poussé vers la membrane 3.

Dans le but de permettre le démontage du jonc 6, le logement 1 présente une encoche 9 permettant l'introduction d'un outil tel qu'un tournevis ou similaire pour pousser le jonc en dehors de la gorge 7. Néanmoins, si l'on ne désire pas que le jonc puisse être démonté on ne prévoira pas d'encoche 9 et dans ce cas le démontage du jonc sera quasiment impossible.

Dans le but d'empêcher que l'on essaie de sortir le jonc avant d'enlever la bague de sécurité, la bague de sécurité est munie d'une languette 83 couvrant partiellement l'encoche 9, comme représentée aux figures 1 et 2, et notamment le jonc 6. En même temps cette languette peut être utilisée pour sortir la bague de sécurité 8, soit au moyen d'un doigt, soit en insérant un tournevis. La bague est également munie de quelques ouvertures 84 comme représentées aux figures 1 et 3 permettant, lorsque pour une raison ou une autre la languette 89 n'est pas accessible, d'insérer un outil tel qu'un tournevis dans une de ces ouvertures pour démonter la bague.

Enfin, la bague peut être pleine ou présenter des évidements 85 permettant d'économiser la matière et contribuant également à l'élasticité de la bague.

Lorsque une étanchéité de bonne qualité est désirée une garniture de joint 10 du type O-ring peut être logée entre le corps 4 et le logement 1 et dans ce cas le corps 4 présente un épaulement 43. Une telle garniture d'étanchéité est souhaitable lorsque le montage est utilisé pour une électrovanne servocommandée comme on le verra par la suite.

Il est à noter que sur les figures, nous avons représenté un logement cylindrique de section circulaire, mais on pourrait très bien utiliser les mêmes moyens si le logement n'était pas de section circulaire mais d'une autre forme par exemple elliptique, voire polygonale. Dans un tel cas la forme du corps 4 devra être conjuguée à celle de l'intérieur du logement 1 pour permettre son déplacement à l'intérieur du logement et la bague et le jonc auront une forme correspondante à cette section.

Comme mentionné précédemment on peut, pour certaines applications, prévoir que le corps 4 est fait d'un matériau élastiquement déformable et dans ce cas la gorge 41 est remplacée par des saillies ou une saillie continue destinée à collaborer avec une gorge continue ou non qui sera prévue dans ce cas là sur la bague 8 pour assurer l'encliquetage de la bague sur le corps. Afin d'assurer une bonne qualité d'encliquetage la bague 8 sera préférablement métallique.

Le démontage de la bague 8 peut être obtenu au moyen d'un tournevis, soit en agissant sous la languette 83, soit en insérant le tournevis dans une des ouvertures 84 pour sortir la bague et, ensuite on insère le tournevis à travers l'encoche 9 pour pousser le jonc 6 vers l'extérieur.

A la figure 5 est représentée une électrovanne servocommandée à deux voies munie d'un dispositif pour la fixation de la membrane selon l'invention. Cette électrovanne sera décrite brièvement ci-après.

L'électrovanne comprend un corps de vanne 11 formant à l'intérieur un logement présentant un épaulement 12 contre lequel est fixé par pincement une membrane 13 au moyen d'un couvercle 14 lequel est tenu en place au moyen d'un jonc 15 logé dans une gorge 16 dudit logement. Le jonc 15 est tenu et verrouillé en place par une bague 17 comme décrit précédemment.

La membrane pincée par le couvercle 14 est solidaire d'un clapet 18 soumis à la pression d'un ressort 19 le tenant en position fermée. En position de repos, un clapet 21, soumis à un ressort 20, ferme le passage permettant de mettre en communication les deux parties du logement séparées par la membrane 13 et le clapet 18. Le clapet 21 est actionné par un électroaimant, la position représentée est une position de repos. Nous ne nous étendrons pas plus sur le fonctionnement et le reste des éléments de cette électrovanne qui sont connus en soi, le seul objet de la présente invention étant le dispositif permettant la fixation de la membrane 13 sur l'épaulement 12 du logement du corps de vanne 11.

## Revendications

1. Dispositif d'assemblage par pincement d'une pièce (3; 13) élastiquement compressible dans le fond (2) d'un logement cylindrique au moyen d'un corps (4; 14) ayant une forme conjuguée à la forme du logement lui permettant de se déplacer axialement dans ledit logement, ledit corps (4; 14) étant bloqué, de manière à comprimer la pièce élastiquement compressible (3; 13), par un jonc fendu (6; 15) disposé dans une gorge (7; 16) de la paroi cylindrique du logement, la forme et les dimensions du jonc (6; 15) étant choisies de manière qu'il s'appuie contre une surface périphérique dudit corps pour l'empêcher de se déplacer axialement vers l'extérieur du logement, caractérisé par le fait que le jonc (6; 15) est verrouillé dans la gorge par une bague (8; 17) présentant des premières zones (82) qui par leur forme empêchent le jonc de sortir de ladite gorge (7; 16) et des secondes zones munies de moyens (81) conjugués à des moyens correspondants (41) dudit corps collaborant à la fixation par encliquetage de la bague sur le corps.

2. Dispositif selon la revendication 1, caractérisé par le fait que la gorge (7) de la paroi présente une encoche (9) destinée à permettre le démontage du jonc (6).

3. Dispositif selon l'une des revendications 1 ou 2, caractérisé par le fait que la bague (8) présente des moyens (83) pour permettre son démontage.

4. Dispositif selon les revendications 2 et 3, caractérisé par le fait que la bague (8) présente une languette (83) couvrant l'encoche (9) de la gorge destinée à empêcher le démontage du jonc avant le démontage de la bague, et à permettre le démontage de la bague.

5. Dispositif selon l'une des revendications 1 à 4, caractérisé par le fait que la bague (8) présente au moins une discontinuité (84) sur sa surface apparente pour permettre sa préhension par un organe de démontage.

6. Dispositif selon l'une des revendications 1 à 5, caractérisé par le fait que la bague (8) est en matériau déformable élastiquement et que les moyens d'encliquetage sont formés par un renflement intérieur (81) continu ou discontinu de la bague collaborant avec une gorge (41) dudit corps (4).

7. Dispositif selon l'une des revendications 1 à 5, caractérisé par le fait que le corps est en matériau élastiquement déformable et qu'il est muni d'un renflement continu ou discontinu collaborant avec une gorge de ladite bague pour assurer l'encliquetage.

8. Dispositif selon l'une des revendications 1 à 7, caractérisé par le fait que les secondes zones (82) sont formées et dimensionnées pour pousser le jonc (6) dans la gorge (7) lors du montage de la bague.

9. Dispositif selon l'une des revendications 1 à 8, caractérisé par le fait que ladite pièce élastiquement compressible est la membrane élastique (13) d'une électrovanne servocommandée.

## Patentansprüche

1. Vorrichtung zum Zusammenbau mittels Klemmen eines elastisch zusammendrückbaren Teils (3; 13) in dem Boden (2) eines zylindrischen Unterbringungsraums mit Hilfe eines Körpers (4; 14), dessen Form der Form des Unterbringungsraums angepasst ist und dem Teil ermöglicht, sich in axialer Richtung im genannten Unterbringungsraum zu bewegen, wobei der genannte Körper (4; 14) durch einen in einer Kehle (7; 16) der zylindrischen Unterbringungsraumwand angeordneten Federring (6; 15) blockiert wird, so dass er das elastisch zusammendrückbare Teil zusammendrückt, wobei die Form und die Abmessungen des Federringes (6; 15) derart ausgewählt sind, dass der Federring gegen eine Umfangsfläche des genannten Körpers drückt, um ihn daran zu hindern, sich in axialer Richtung aus dem Unterbringungsraum zu bewegen, dadurch gekennzeichnet, dass der Federring (6; 15) in der Kehle durch einen Ring (8; 17) verriegelt wird, welcher erste Zonen (82) aufweist, die durch ihre Form den Federring daran hindern, aus der Kehle (7;16) auszutreten, und welcher auch zweite Zonen aufweist, die mit Mitteln (81) versehen sind, welche mit entsprechenden Mitteln (41) des genannten Körpers gekoppelt sind, die zur Befestigung des Ringes durch Einrasten auf den Körper dienen.

2. Vorrichtung nach Anspruch 1, dadurch gekennzeichnet, dass die Kehle (7) der Wand eine Kerbe (9) aufweist, die dazu vorgesehen ist, das Abmontieren des Federringes (6) zu ermöglichen.

3. Vorrichtung nach einem der Ansprüche 1 oder 2, dadurch gekennzeichnet, dass der Ring (8) Mittel (83) aufweist, um sein Abmontieren zu erlauben.

4. Vorrichtung nach den Ansprüchen 2 und 3, dadurch gekennzeichnet, dass der Ring (8) eine Zunge (83) aufweist, die die Kerbe (9) der Kehle überdeckt und dazu vorgesehen ist, das Abmontieren des Federringes vor dem Abmontieren des Ringes zu verhindern und das Abmontieren des Ringes zu erlauben.

5. Vorrichtung nach einem der Ansprüche 1 bis 4, dadurch gekennzeichnet, dass der Ring (8) wenigstens eine Diskontinuität (84) auf seiner sichtbaren Fläche aufweist, um das Greifen des Ringes durch ein Demontageorgan zu erlauben.

6. Vorrichtung nach einem der Ansprüche 1 bis 5, dadurch gekennzeichnet, dass der Ring (8) aus einem elastisch verformbaren Material ist und dass die Einrastmittel aus einer inneren, kontinuierlichen oder diskontinuierlichen Verdickung (81) des Ringes gebildet sind, die mit einer Kehle (41) des genannten Körpers (4) zusammenarbeitet.

7. Vorrichtung nach einem der Ansprüche 1 bis 5, dadurch gekennzeichnet, dass der Körper aus einem elastisch verformbaren Material besteht und dass er mit einer kontinuierlichen oder diskontinuierlichen Verdickung versehen ist, welche mit einer Kehle des genannten Rings zusammenarbeitet, um das Einrasten zu gewährleisten.

8. Vorrichtung nach einem der Ansprüche 1 bis 7, dadurch gekennzeichnet, dass die zweiten Zonen (82) gebildet und dimensioniert sind, um bei der Montage des Ringes den Federring (6) in die Kehle (7) zu drücken.

9. Vorrichtung nach einem der Ansprüche 1 bis 8, dadurch gekennzeichnet, dass das genannte elastisch zusammendrückbare Teil die elastische Membran (13) eines servogesteuerten Elektroventils ist.

## Claims

1. Device for the assembly by clamping of an elastically compressible part (3; 13) in the bottom (2) of a cylindrical housing by means of a body (4; 14) having a shape matching the shape of the housing enabling it to move axially in said housing, said body (4; 14) being immobilized, so as to compress the elastically compressible part (3; 13), by a split ring (6; 15) placed in a grove (7; 16) of the cylindrical wall of the housing, the shape and dimensions of the ring (6; 15) being selected in such a way that it bears against a peripherical surface of said body in order to prevent it from moving radially outward of the housing, characterized by the fact that the ring (6; 15) is locked in the groove by a collar (8; 17) having first zones (82) which, by virtue of their shape, prevent the ring from moving out of said groove (7; 16) and second zones provided with means (81) matching corresponding means (41) of said body participating in the fixing by snap-fitting of the collar onto the body.

2. Device as claimed in claim 1, characterized by the fact that the groove (7) of the wall has a notch (9) intended to enable the ring (6) to be removed.

3. Device as claimed in anyone of the claims 1 or 2, characterized by the fact that the collar (8) has a tab (83) covering the notch (9) of the groove which is intended to prevent the ring from being removed before the collar is removed, and to enable the collar to be removed.

4. Device as claimed in claims 2 and 3, characterized by the fact that the collar (8) has a tab (83) covering the notch (9) of the groove which is intended to prevent the ring from being removed before the collar is removed, and to enable the collar to be removed.

5. Device as claimed in anyone of the claims 1 to 4, characterized by the fact that the collar (8) has at least one discontinuity (84) on its visible surface for enabling it to be gripped by a removing member.

6. Device as claimed in anyone of the claims 1 to 5, characterized by the fact that the collar (8) is made of elastically deformable material and the snap-fitting means are formed by a continuous or discontinuous internal bulge (81) on the ring interacting with a groove (41) of said body (4).

7. Device as claimed in anyone of the claims 1 to 5, characterized by the fact that the body is made of elastically deformable material and is provided with a continuous or discontinuous bulge interacting with a groove of said collar in order to ensure snap-fitting.

8. Device as claimed in anyone of the claims 1 to 7, characterized by the fact that the second zones (82) are formed and sized in order to push the ring (6) into the groove (7) during the mounting of the collar.

9. Device as claimed in anyone of the claims 1 to 8, characterized by the fact that said elastically compressible part is the elastic membrane (13) of a servocontrolled solenoid valve.
